# EUROPÄISCHE PATENTSCHRIFT

(11) **EP 1 016 572 B1**
(45) Veröffentlichungstag und Bekanntmachung des Hinweises auf die Patenterteilung: **03.06.2009**
(21) Anmeldenummer: 99113983.3
(22) Anmeldetag: 17.07.1999
(51) Int. Cl.: B60T 8/17

(54) **Vorrichtung und Verfahren zur Stabilisierung eines aus einem Zugfahrzeug und einem Anhänger bzw. Auflieger bestehenden Fahrzeuggespannes**
Device and procedure for stabilising a vehicle coupling consisting of a tractor and a trailer
Dispositif et procédé de stabilisation d'un attelage de véhicules constitué d'un tracteur et d'une remorque

(30) Priorität: 28.12.1998 DE 19859953
(43) Veröffentlichungstag der Anmeldung: 05.07.2000
(73) Patentinhaber: KNORR-BREMSE SYSTEME FÜR NUTZFAHRZEUGE GMBH, 80809 München (DE)
(72) Erfinder: Wetzel, Gabriel, 70435 Stuttgart (DE); Faye, Ian, 70192 Stuttgart (DE); Leimbach, Klaus-Dieter, Dr., 71696 Moeglingen (DE); Kühnle, Uwe, 71665 Vaihingen (DE)

(56) Entgegenhaltungen:
- EP-A- 0 358 973
- EP-A- 0 575 936
- DE-A- 19 708 144
- DE-C- 4 431 698
- US-A- 4 023 864
- US-A- 5 380 072

## Beschreibung

### Stand der Technik

Die Erfindung betrifft eine Vorrichtung und ein Verfahren zur Stabilisierung eines aus einem Zugfahrzeug und einem Anhänger bzw. Auflieger bestehenden Fahrzeuggespannes. Solche Vorrichtungen und Verfahren sind aus dem Stand der Technik in vielerlei Modifikationen bekannt.

Aus der DE-OS 25 47 487 ist eine Vorrichtung zur Stabilisierung eines Fahrzeuges, welches aus einem Führungsteil und einem Schubteil besteht, bekannt. Dabei ist das Schubteil über ein Gelenk mit dem Führungsteil verbunden. Die Vorrichtung weist einen Meßwertgeber zum Abtasten des zwischen dem Führungsteil und dem Schubteil auftretenden Knickwinkels auf. Ferner ist ein Meßwertgeber zur Erfassung des Lenkwinkels vorgesehen. Die Vorrichtung umfaßt eine Auswerteschaltung, der die Signale beider Meßwertgeber zugeführt werden und die Ausgangssignale erzeugt, wenn der Knickwinkel bestimmte Winkelgrößen überschreitet, die vom Lenkwinkel abhängig sind. Die bestimmten Winkelgrößen entsprechen den in Abhängigkeit des Lenkwinkels ermittelten und in der jeweiligen Fahrsituation zulässigen Knickwinkein. Ferner sieht die Vorrichtung ein Gerät zum automatischen Einsteuern von Bremsdruck an wenigstens einer Achse des Schubteiles vor, welches von den Ausgangssignalen der Auswerteschaltung betätigt wird. Die vorstehend beschriebene Maßnahme bewirkt durch die Bremsung ein Strecken des Fahrzeuges und damit eine Verkleinerung des augenblicklichen Knickwinkels.

Die EP 0 575 936 A1 befasst sich mit einer Koppelkraftregelung zwischen einem Zugfahrzeug und einem gezogenen Fahrzeug, wodurch einerseits eine Verschleißminimierung und andererseits eine Erhöhung der Fahrstabilität des Wagenzugs erzielt wird. Ein Grundgedanke der vorliegenden Erfindung liegt darin, die Sensierung der Kräfte, die an der Kupplung zwischen Zugmaschine und gezogenem Fahrzeug auftreten, zu reduzieren und zu vereinfachen, so dass letztlich eine robuste und betriebssichere Koppelkraftregelung gewährleistet ist. Zu diesem Zwecke wird ein Verfahren mit einer entsprechenden Vorrichtung vorgeschlagen, das lediglich die Messung von einem bestimmten Schwellwert der Druckkraft in Fahrrichtung an der Kupplung zusätzlich zu den bereits vorhandenen Parametern vornimmt. Die übrigen zur weiteren Regelung benötigten Parameter werden mit Hilfe eines Mikrocomputers berechnet.

Eine Aufgabe der voriiegenden Erfindung besteht darin, bestehende Vorrichtungen bzw. Verfahren zur Stabilisierung eines Fahrzeuggespannes zu verbessern. Diese Aufgabe wird durch die Merkmale des Anspruchs 1 bzw. durch die des Anspruchs 12 gelöst.

### Vorteile der Erfindung

Seit ihrer Einführung breitet sich der Einsatz von Bremsschlupfregelsystemen zur Unfallvermeidung in längsdynamisch kritischen Fahrsituationen immer weiter aus. Solche Bremsschlupfregelsysteme werden sowohl für Personenkraftwagen als auch für Nutzkraftwagen angeboten. Seit geraumer Zeit wird die Fahrsicherheit für Personenkraftwagen mit einem sogenannten Fahrdynamikregelsystem zusätzlich erweitert. Mit Hilfe eines solchen Fahrdynamikregelsystems wird die Gierrate des Fahrzeuges geregelt. Fahrdynamikregelsysteme stellen dem Fahrer nicht nur eine verbesserte Bremsschlupfregel- und Antriebsschlupfregel-Grundfunktion bereit, sie unterstützen ihn auch aktiv in querdynamisch kritischen Situationen. Hierbei wird die Fahrstabilität in allen Betriebszuständen verbessert, d.h. im Voll- und Teilbremsbereich, beim Freirollen, beim Antrieb, bei Schub- und Lastwechseln. Das Fahrdynamikregelsystem greift ein, sobald der fahrdynamische Grenzbereich erreicht wird. Bei Personenkraftwagen reduziert das Fahrdynamikregelsystem auch bei extremen Lenkmanövern die Schleudergefahr und ermöglicht eine sicheres Beherrschen des Fahrzeuges.

Die Vorzüge eines Fahrdynamikregelsystems sollen auch für Nutzfahrzeuge bereitgestellt werden. Allerdings sind für Nutzfahrzeuge die Anforderungen an die Stabilität nicht nur auf das Schleuderverhalten eines einzigen Fahrzeugteiles begrenzt, sondern es muß auch das Einknicken der Glieder eines mehrteiligen Fahrzeuges berücksichtigt werden. Bei der erfindungsgemäßen Vorrichtung handelt es sich um eine Vorrichtung zur Stabilisierung eines aus einem Zugfahrzeug und einem Anhänger bzw. Auflieger bestehenden Fahrzeuggespannes. Wegen des weit verbreiteten Einsatzes zur Straßengüterbeförderung und der besonderen Problematik von Sattelzügen wird im Ausführungsbeispiel die erfindungsgemäße Vorrichtung für ein aus einem Zugfahrzeug und einem Auflieger bestehenden Fahrzeuggespann vorgestellt. Ungeachtet dessen kann die erfindungsgemäße Vorrichtung auch für ein Fahrzeuggespann, welches aus einem Zugfahrzeug und einem Anhänger, insbesondere einem Deichselanhänger, besteht, eingesetzt werden. Bei Fahrzeuggespannen entsteht eine Gefahrensituation sobald der Knickwinkel zwischen Zugfahrzeug und Auflieger bzw. Anhänger zu groß wird.

Die erfindungsgemäße Vorrichtung enthält erste Ermittlungsmittel, mit denen eine Knickwinkelgröße ermittelt wird, die den Winkel zwischen einer in Längsrichtung des Zugfahrzeuges orientierten Achse, insbesondere der Längsachse des Zugfahrzeuges, und einer in Längsrichtung des Anhängers bzw. Aufliegers orientierten Achse, insbesondere der Längsachse des Anhängers bzw. Aufliegers beschreibt. Ferner enthält die Vorrichtung Verarbeitungsmittel, mit denen in Abhängigkeit der Knickwinkelgröße und einer Vergleichsgröße ein Vergleich durchgeführt wird. Außerdem weist die Vorrichtung erste Aktuatormittel auf, die dem Anhänger bzw. Auflieger zugeordnet sind und mit denen an wenigstens einem Rad des Anhängers bzw. Aufliegers ein Bremsdruck einstellbar ist. Diese ersten Aktuatormittel werden zumindest in Abhängigkeit des mit den Verarbeitungsmitteln durchgeführten Vergleiches betätigt.

Erfindungsgemäß enthält die Vorrichtung zweite Ermittlungsmittel, mit denen die Vergleichsgröße in Abhängigkeit einer Geschwindigkeitsgröße, die die Geschwindigkeit des Zugfahrzeuges beschreibt und abhängig davon, ob für das Zugfahrzeug Stabilisierungseingriffe durchgeführt werden, ermittelt wird.

Die erfindungsgemäße Ermittlung der Vergleichsgröße in Abhängigkeit der Geschwindigkeitsgröße erfolgt aus folgendem Grund: Die Geschwindigkeit des Fahrzeuggespannes beeinflußt in erheblichem Maße die Stabilität des Fahrzeuggespannes. Weist das Fahrzeuggespann eine kleine Geschwindigkeit auf, wie es beispielsweise bei einem Rangiervorgang der Fall ist, so kann für den Knickwinkel eine große Vergleichsgröße zugelassen werden. Aufgrund der geringen kinetischen Energie des Aufliegers ist eine Vergrößerung des Knickwinkels, wie sie beispielsweise durch ein eventuell auftretendes Schieben des Aufliegers während eines Bremsvorganges zustande kommen kann, und somit eine Instabilität des Fahrzeuggespannes nicht zu warten. Weist das Fahrzeuggespann dagegen eine große Geschwindigkeit auf, wie es beispielsweise bei Überlandfahrten der Fall ist, so ist für den Knickwinkel, verglichen mit einem Rangiervorgang, eine kleinere Vergleichsgröße vorzugeben. Würde bei Fahrten mit großer Geschwindigkeit ein zu großer Knickwinkel zugelassen, so könnte ein querdynamischer Einfluß auf den Auflieger aufgrund seiner der großen kinetischen Energie zu einer unkontrollierten Vergrößerung des Knickwinkels und somit zu einem Einknicken des Fahrzeuggespannes führen. Vor diesem Hintergrund wird klar, daß eine fest eingestellte Vergleichsgröße, die einen großen Wert aufweist, wie er beispielsweise für einen Rangiervorgang erforderlich ist, nicht verwendbar ist. Eine zu große Vergleichsgröße würde bei größeren Fahrzeuggeschwindigkeiten zu einer Stabilitätseinbuße führen, da mögliche Instabilitäten zu spät erkannt und somit die ersten Aktuatormittel zu spät betätigt werden würden.

Aus folgendem Grund wird die Vergleichsgröße abhängig davon, ob für das Zugfahrzeug Stabilisierungseingriffe durchgeführt werden, ermittelt: Wenn für das Zugfahrzeug Stabilisierungseingriffe durchgeführt werden, so ist mit einer Instabilität des Fahrzeuggespannes zu rechnen. Da Stabilisierungseingriffe am Zugfahrzeug unter anderem zu einer Reduzierung der Geschwindigkeit des Zugfahrzeuges führen, sollte in solch einem Fall kein allzu großer Knickwinkel zugelassen werden, da dies in solchen Fällen zu einer Zunahme des Knickwinkels uns somit zu einer Instabilität des Fahrzeuggespannes führen könnte.

Bei den vorstehend erwähnten Stabilisierungseingriffen für das Zugfahrzeug handelt es sich vorteilhafterweise um solche, die wenigstens in Abhängigkeit einer die Querdynamik des Zugfahrzeuges beschreibenden Größe, insbesondere einer die Gierrate und/oder einer die Querbeschleunigung des Zugfahrzeuges beschreibenden Größe, durchgeführt werden. Diese Größen werden für gewöhnlich mit vorstehend erwähnten Fahrdynamikregelsystemen geregelt. Alternativ bzw. ergänzend werden die Stabilisierungseingriffe für das Zugfahrzeug auch in Abhängigkeit von Radverhaltensgrößen, die das Radverhalten der Räder des Zugfahrzeuges bzw. Aufliegers beschreiben, durchgeführt. Bei den Radverhaltensgrößen handelt es sich beispielsweise um Raddrehzahlgrößen oder um Schlupfgrößen.

Zur Realisierung der Stabilisierungseingriffe, die für das Zugfahrzeug durchgeführt werden, weist die Vorrichtung zweite Aktuatormittel auf, die dem Zugfahrzeug zugeordnet sind. Bei diesen Stabilisierungseingriffen handelt es sich vorteilhafterweise um Eingriffe in die Bremsen des Zugfahrzeuges und/oder in den Vortrieb des Zugfahrzeuges und/oder in den Retarder des Zugfahrzeuges. Durch die Eingriffe in den Vortrieb bzw. in den Retarder wird primär die Geschwindigkeit des Zugfahrzeuges reduziert. Durch die Eingriffe in die Bremsen des Zugfahrzeuges können zum einen gezielt Bremsmomente an einzelnen Rädern aufgebracht werden, die zu einem Giermoment um die Hochachse des Zugfahrzeuges führen. Zum anderen kann durch die Eingriffe in die Bremsen des Zugfahrzeuges ebenfalls dessen Geschwindigkeit reduziert werden.

Da in den zweiten Ermittlungsmitteln die Vergleichsgröße unter anderem abhängig davon, ob für das Zugfahrzeug Stabilisierungseingriffe durchgeführt werden, ermittelt wird, muß den zweiten Ermittlungsmitteln eine entsprechende Information zugeführt werden. Hierfür bieten sich zwei vorteilhafte Ausgestaltungen an. Zum einen werden den zweiten Ermittlungsmitteln Größen zugeführt, die in den Verarbeitungsmitteln für die Ansteuerung der zweiten Aktuatormittel erzeugt werden. Bei diesen Größen handelt es sich beispielsweise um Größen, in deren Abhängigkeit Eingriffe in die Bremsen des Zugfahrzeuges und/oder in den Vortrieb und/oder in den Retarder durchgeführt werden. Zum anderen wird den zweiten Ermittlungsmitteln eine Größe zugeführt, die in den Verarbeitungsmitteln erzeugt wird, und die anzeigt, daß für das Zugfahrzeug Stabilisierungseingriffe durchgeführt werden. Diese Größe zeigt pauschal an, daß Stabilisierungseingriffe durchgeführt werden, ohne dabei eine Information darüber zu enthalten, welche Art von Stabilisierungseingriffen durchgeführt werden.

Von besonderem Vorteil hat es sich erwiesen, daß die Vergleichsgröße ferner in Abhängigkeit einer Lenkwinkelgröße, die den für das Zugfahrzeug eingestellten Lenkwinkel beschreibt, ermittelt wird. Durch die Berücksichtigung der Lenkwinkelgröße bei der Ermittlung der Vergleichsgröße kann beispielsweise ein Rangiervorgang besser erkannt werden. Zur Ermittlung der Lenkwinkelgröße sieht die Vorrichtung dritte Ermittlungsmittel vor.

Die ersten Aktuatormittel werden vorteilhafterweise dann betätigt, wenn die Knickwinkelgröße größer als die Vergleichsgröße ist, da in solchen Situationen mit einer Instabilität des Fahrzeuggespannes zu rechnen ist.

Bei der Vergleichsgröße handelt es sich vorteilhafterweise um eine vorgegebene Vergleichsgröße. Dabei gibt es zwei Möglichkeiten: Zum einen kann es sich bei der Vergleichsgröße um eine fest vorgegebene Vergleichsgröße handeln, die im Vorfeld durch Fahrversuche und unter Beobachtung des Fahrzeugverhaltens ermittelt wird. Zum anderen kann es sich um eine Vergleichsgröße handeln, die während des Betriebs des Fahrzeuges mit Hilfe eines ersten Fahrzeugmodelles ermittelt wird. Dabei kann das erste Fahrzeugmodell beispielsweise so gewählt sein, daß die Vergleichsgröße in Abhängigkeit des vom Fahrer eingestellten Lenkwinkels und der Fahrzeuggeschwindigkeit ermittelt wird. Die vorgegebene Vergleichsgröße wird in Abhängigkeit der Geschwindigkeitsgröße und/oder abhängig davon, ob für das Zugfahrzeug Stabilisierungseingriffe durchgeführt werden, an die jeweils vorliegende Fahzeuggespannsituation angepaßt. Im ersten Fall, bei dem die Vergleichsgröße fest vorgegeben ist, wird die Anpassung der Vergleichsgröße in gleichen Maßen in Abhängigkeit der Geschwindigkeitsgröße und abhängig davon, ob für das Zugfahrzeug Stabilisierungseingriffe durchgeführt werden, vorgenommen. Im zweiten Fall, bei dem die Vergleichsgröße mit Hilfe eines ersten Fahrzeugmodelles ermittelt wird, hat die Anpassung der Vergleichsgröße abhängig davon, ob für das Zugfahrzeug Stabilisierungseingriffe durchgeführt werden, größere Bedeutung, da aufgrund der Verwendung des ersten Fahrzeugmodelles die Fahrzeuggeschwindigkeit bereits berücksichtigt ist.

An dieser Stelle sei auf den Begriff Fahrzeuggespannsituation eingegangen. Unter Fahrzeuggespannsituation wird die jeweils vorliegende augenblickliche Situation bzw. der jeweils vorliegende augenblickliche Zustand des Fahrzeuggespannes verstanden. D.h. der Begriff "Fahrzeuggespannsituation" beschreibt, ob das Fahrzeuggespann eingeknickt ist oder nicht, ob ein Teil des Fahrzeuggepsannes instabil ist oder nicht, oder ob das Fahrzeuggespann als solches instabil ist oder nicht.

Gemäß den vorstehenden Ausführungen wird der Wert der vorgegebenen Vergleichsgröße vorteilhafterweise mit größer werdendem Wert der Geschwindigkeitsgröße und/oder bei Vorliegen von für das Zugfahrzeug durchgeführten Stabilisierungseingriffen verkleinert.

Als besonders vorteilhaft hat es sich erwiesen, daß der Wert der vorgegebenen Vergleichsgröße, nachdem er verkleinert wurde, für eine bestimmte Zeitdauer beibehalten wird. Dadurch wird sichergestellt, daß beispielsweise für den Fall, bei dem die Vergleichsgröße aufgrund von für das Zugfahrzeug durchgeführten Stabilisierungseingriffen verkleinert wurde, nach diesen Stabilisierungseingriffen noch für eine gewisse Zeitdauer beibehalten wird, und dadurch potentielle Instabilitäten des Fahrzeuggespannes vermieden werden.

Ebenso hat sich als vorteilhaft erwiesen, daß der Wert der Vergleichsgröße in Abhängigkeit des Wertes der Geschwindigkeitsgröße und/oder in Abhängigkeit der Art und/oder der Stärke der für das Zugfahrzeug durchgeführten Stabilisierungseingriffe aus einem Kennfeld ausgelesen wird. In entsprechender Weise nimmt bei dieser Art von Ermittlung der Wert der Vergleichsgröße mit größer werdendem Wert der Geschwindigkeitsgröße und/oder bei Vorliegen von für das Zugfahrzeug durchgeführten Stabilisierungseingriffen ab. Die im Kennfeld abgelegten Wertepaare werden beispielsweise im Vorfeld durch Fahrversuche ermittelt.

Vorteilhafterweise sind die ersten Ermittlungsmittel als Sensormittel ausgebildet. Dabei kommen als Sensormittel beispielsweise ein sowohl mit dem Zugfahrzeug als auch mit dem Auflieger in Wirkverbindung stehendes Potentiometer oder optische Sensoren oder Ultraschallsensoren oder Radarsensoren in Frage. Alternativ ist es vorteilhaft, wenn in den ersten Ermittlungsmitteln die Knickwinkelgröße unter Verwendung eines zweiten Fahrzeugmodelles ermittelt wird. Dabei ist allerdings darauf zu achten, daß das zweite Fahrzeugmodell andere Eingangsgrößen als das erste Fahrzeugmodell verwendet.

Weitere Vorteile sowie vorteilhafte Ausgestaltungen können den Unteransprüchen, wobei auch eine beliebige Kombination der Unteransprüche denkbar ist, der Zeichnung sowie der Beschreibung des Ausführungsbeispiels entnommen werden.

### Zeichnung

Die Zeichnung besteht aus den Figuren 1 bis 3. Figur 1 zeigt ein Fahrzeuggespann, bei dem die erfindungsgemäße Vorrichtung eingesetzt wird. Figur 2 zeigt in einer Übersichtsanordnung die verschiedenen in der erfindungsgemäßen Vorrichtung enthaltenen Mittel. Figur 3 zeigt mit Hilfe eines Ablaufdiagrammes eine Ausführungsform des erfindungsgemäßen Verfahrens, welches in der erfindungsgemäßen Vorrichtung abläuft.

### Ausführungsbeispiel

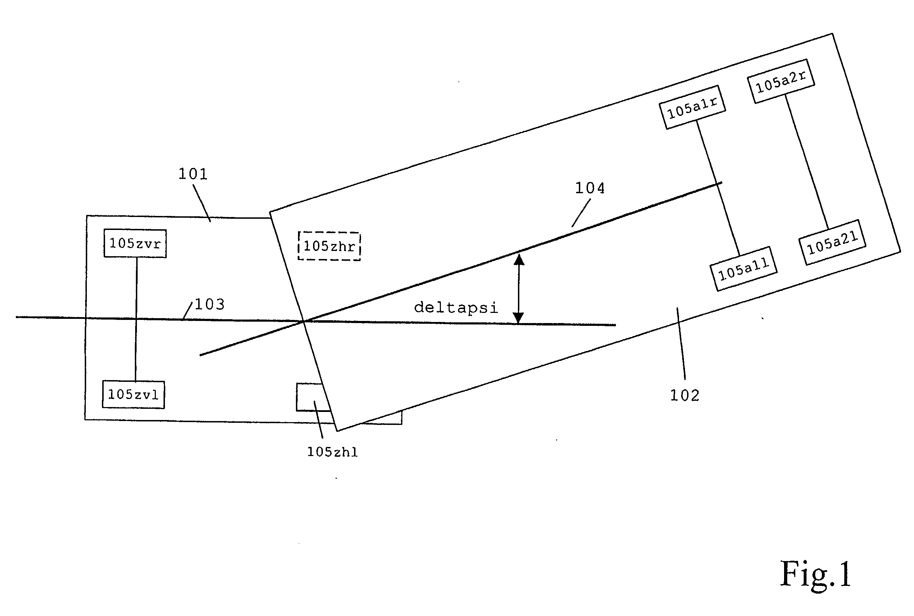

Figur 1 zeigt ein Fahrzeuggespann, welches aus einem Zugfahrzeug 101 und einem Auflieger 102 besteht. Das Zugfahrzeug 101 und der Auflieger 102 stehen über ein nicht dargestelltes Drehgelenk, für gewöhnlich ein Königszapfen, in Wirkverbindung.

Wie bereits vorstehend erwähnt, liegt dem Ausführungsbeispiel ein Sattelzug als Fahrzeuggespann zugrunde. Dies soll keine Einschränkung darstellen. Die erfindungsgemäße Vorrichtung ist in entsprechender Weise auch für ein Fahrzeuggespann anwendbar, welches aus einem Zugfahrzeug und einem Deichselanhänger besteht.

Das Zugfahrzeug 101 weist Räder 105zij auf, denen Aktuatoren zur Durchführung von Bremseingriffe zugeordnet sind. Bei der Schreibweise 105zij gibt der Index z an, daß es sich um die Räder des Zugfahrzeuges handelt. Der Index i gibt an, ob es sich um eine Vorderachse (v) oder um eine Hinterachse (h) handelt. Durch den Index j wird angezeigt, ob es sich um ein rechtes (r) bzw. um ein linkes (l) Fahrzeugrad handelt. Die den Fahrzeugrädern 105zij zugeordneten Aktuatoren sind Teil der zweiten Aktuatormittel, die dem Zugfahrzeug zugeordnet sind. Der Auflieger 102 weist Räder 105axj auf. Mit dem Index a wird angezeigt, daß es sich um Räder des Aufliegers handelt. Der Index x zeigt an, zu welcher Achse des Aufliegers das jeweilige Rad gehört. Je näher die Achse der rückwärtigen Berandung des Aufliegers ist, desto höher ist der Wert dieses Indexes. Der Index j hat dieselbe Bedeutung wie im Zusammenhang mit dem Zugfahrzeug. Die Bedeutung der Indizes a, i, j, x sowie z ist bei allen Größen bzw. Komponenten, bei denen sie verwendet werden gleich.

An dieser Stelle sei bemerkt, daß die in Figur 1 dargestellte Anzahl der Räder des Zugfahrzeuges bzw. des Aufliegers sowie die in Figur 1 dargestellte Anzahl der Achsen keine einschränkende Wirkung auf die erfindungsgemäße Vorrichtung hat. In entsprechender Weise können auch anstatt der in Figur 1 dargestellten Einzelräder teilweise Zwillingsräder verwendet werden.

In Figur 1 ist für das Zugfahrzeug dessen Längsachse 103 eingezeichnet. In entsprechender Weise ist für den Auflieger dessen Längsachse 104 eingezeichnet. Wie Figur 1 zu entnehmen ist, schließen die beiden Längsachsen 103 bzw. 104 einen Winkel deltapsi ein, der als Knickwinkel bezeichnet wird. Je nach dem, wie weit der Auflieger bezogen auf das Zugfahrzeug ausgelenkt ist, ist der Knickwinkel deltapsi unterschiedlich groß.

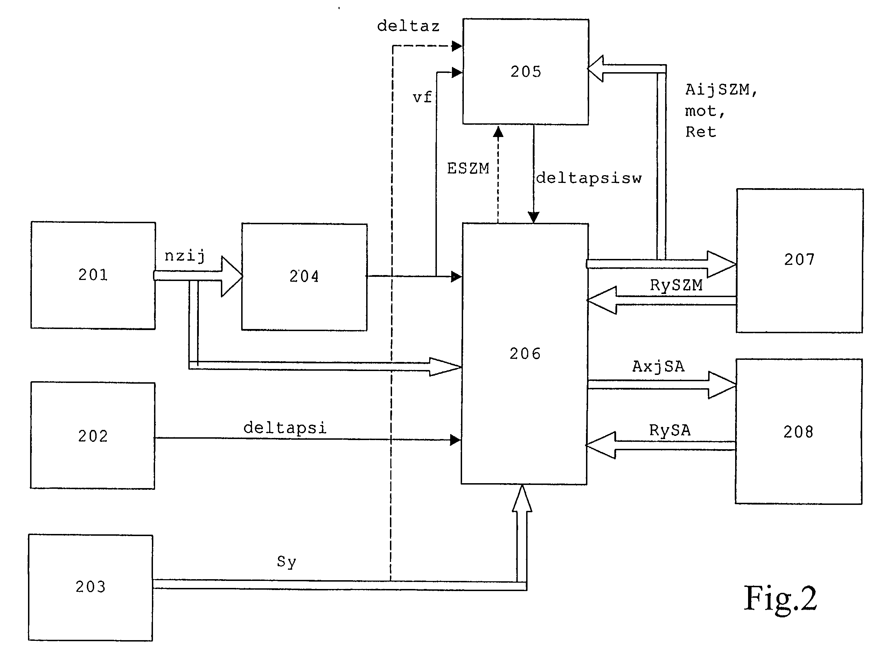

Block 201 in Figur 2 stellt Raddrehzahlsensoren dar, die den Rädern 105zij des Zugfahrzeuges zugeordnet sind. Mit Hilfe dieser Raddrehzahlsensoren 201 werden Raddrehzahlgrößen nzij, die die Raddrehzahl des jeweiligen Rades beschreiben, ermittelt. Die Raddrehzahlgrößen nzij werden ausgehend vom Block 201 einem Block 204 sowie einem Block 206 zugeführt. Im Block 204 wird in Abhängigkeit der Raddrehzahlgrößen nzij eine Geschwindigkeitsgröße vf ermittelt, die die Geschwindigkeit des Zugfahrzeuges beschreibt.

Die Geschwindigkeitsgröße vf wird sowohl einem Block 205 als auch einem Block 206 zugeführt.

Block 202 stellt erste Ermittlungsmittel dar, mit denen eine Knickwinkelgröße deltapsi ermittelt wird, die den Winkel zwischen der Längsachse 103 des Zugfahrzeuges und der Längsachse 104 des Aufliegers beschreibt. Die Knickwinkelgröße deltapsi wird ausgehend vom Block 202 dem Block 206 zugeführt. Die ersten Ermittlungsmittel sind als Sensormittel ausgebildet, wobei als Sensormittel ein sowohl mit dem Zugfahrzeug als auch mit dem Auflieger in Wirkverbindung stehendes Potentiometer oder optische Sensoren oder Ultraschallsensoren oder Radarsensoren eingesetzt werden. Alternativ bietet sich an, daß in den ersten Ermittlungsmitteln die Knickwinkelgröße unter Verwendung eines zweiten Fahrzeugmodells ermittelt wird.

Block 203 stellt dritte Ermittlungsmittel dar, mit denen sowohl für das Zugfahrzeug 101 als auch für den Auflieger 102 verschiedene Größen Sy, die das jeweilige Verhalten des Zugfahrzeuges bzw. des Aufliegers beschreiben, ermittelt werden. Diese Größen Sx werden ausgehend vom Block 203 dem Block 206 zugeführt. Bei den Größen Sy handelt es sich z.B. um eine Querbeschleunigungsgröße aqz, die die Querbeschleunigung des Zugfahrzeuges beschreibt, um eine Giergeschwindigkeitsgröße omegaz, die die Giergeschwindigkeit des Zugfahrzeuges beschreibt, um eine Lenkwinkelgröße deltaz, die den für das Zugfahrzeug eingestellten Lenkwinkel beschreibt, sowie um Raddrehzahlgrößen naxj, die die Raddrehzahlen der dem Auflieger zugeordneten Räder 105axj beschreiben. Die Größen Sy können auch eine Größe Pvor umfassen, die den vom Fahrer eingestellten Vordruck beschreibt. Welche Sensorik der Block 203 im einzelnen umfaßt, hängt davon ab, was für eine Regelung im Block 206 implementiert ist. Auf diesen Sachverhalt wird im Rahmen der Beschreibung der Blöcke 205 bzw. 206 ausführlicher eingegangen.

Block 205 stellt zweite Ermittlungsmittel dar, mit denen eine Vergleichsgröße deltapsisw in Abhängigkeit der Geschwindigkeitsgröße vf und/oder abhängig davon, ob für das Zugfahrzeug Stabilisierungseingriffe durchgeführt werden, ermittelt wird. Die Vergleichsgröße deltapsisw wird ausgehend vom Block 205 dem Block 206 zugeführt.

Abhängig davon, was für eine Regelung im Block 206 implementiert ist, liegen unterschiedliche Stabilitätseingriffe für das Zugfahrzeug vor. Im folgenden wird davon ausgegangen, daß es sich bei der im Block 206 implementierten Regelung um eine sogenannte Fahrdynamikregelung handelt, bei der zumindest die Gierrate und/oder der Schwimmwinkel des Zugfahrzeuges geregelt wird. Dabei ist im Block 206 sowohl für die Gierrate als auch für den Schwimmwinkel ein Istwert erforderlich. Der Istwert omegaz für die Gierrate wird dem Block 206 ausgehend vom Block 203 zugeführt. Der Istwert für den Schwimmwinkel wird im Block 206 in Abhängigkeit der ihm zugeführten Querbeschleunigung aqz des Zugfahrzeuges, aus der die Fahrzeugquergeschwindigkeit ermittelt wird, der Geschwindigkeitsgröße vf, die die Geschwindigkeit des Fahrzeuges in Längsrichtung darstellt, und der Gierrate omegaz des Zugfahrzeuges ermittelt. Die Sollwerte für die Gierrate und den Schwimmwinkel werden beispielsweise in bekannter Weise unter Verwendung von Fahrzeugmodellen ermittelt. Als Eingangsgrößen fur diese Fahrzeugmodelle dienen beispielsweise die Fahrzeuggeschwindigkeit und der für das Zugfahrzeug eingestellte Lenkwinkel.

Bei einer Fahrdynamikregelung für ein Fahrzeuggespann wird auch der Knickwinkel zwischen dem Zugfahrzeug und dem Auflieger bei der Regelung berücksichtigt. Für diese Berücksichtigung des Knickwinkels gibt es mehrere Möglichkeiten. Beispielsweise kann der Knickwinkel im Sinne einer Regelung berücksichtigt werden. In diesem Fall ist ein Istwert und ein Sollwert, der der vorgenannten Vergleichsgröße entspricht, für den Knickwinkel erforderlich. Für den Knickwinkel wird in entsprechender Weise wie für die Gierrate und den Schwimmwinkel ein Sollwert ermittelt. Hierzu kann ein erstes Fahrzeugmodell zum Einsatz kommen, dem als Eingangsgrößen die Fahrzeuggeschwindigkeit und der Lenkwinkel zugeführt werden. Die sich aus dem Istwert und dem Sollwert ergebende Regelabweichung für den Knickwinkel wird bei der Ermittlung der eventuell durchzuführenden Stabilitätseingriffe berücksichtigt. In Figur 2 ist diese Möglichkeit, den Sollwert, d.h. die Vergleichsgröße für den Knickwinkel mit Hilfe eines ersten Fahrzeugmodells zu ermitteln, durch die strichlinierte Zuführung des Lenkwinkels deltaz zum Block 205 angedeutet. Bei dieser Möglichkeit der Berücksichtigung des Knickwinkels wird der Sollwert für den Knickwinkel nach dessen Ermittlung in Abhängigkeit der Geschwindigkeitsgröße und abhängig davon, ob für das Zugfahrzeug Stabilisierungseingriffe vorliegen, an die jeweils vorliegende Fahrzeuggespannsituation angepaßt. In erster Linie kommen bei dieser Anpassung den Stabilitätseingriffen eine größere Bedeutung als der Geschwindigkeit zu.

Eine andere Berücksichtigung des Knickwinkels wird dadurch realisiert, daß für den Knickwinkel eine Vergleichsgröße fest vorgegeben ist, mit der der Knickwinkel verglichen wird. Diese fest vorgegebene Vergleichsgröße, die im Vorfeld mit Hilfe von Fahrversuchen ermittelt wird, wird in entsprechender Weise in Abhängigkeit der Geschwindigkeitsgröße und abhängig davon, ob für das Zugfahrzeug Stabilitätseingriffe durchgeführt werden, an die jeweils vorliegende Fahrzeuggespannsituation angepaßt. Eine weitere Möglichkeit der Berücksichtigung des Knickwinkels besteht darin, daß der Wert der Vergleichsgröße in Abhängigkeit des Wertes der Geschwindigkeitsgröße und/oder in Abhängigkeit der Art und/oder der Stärke der für das Zugfahrzeug durchgeführten Stabilisierungseingriffe aus einem Kennfeld ausgelesen wird. Auch in diesem Fall werden die im Kennfeld abgelegten Wertepaare im Vorfeld mit Hilfe von Fahrversuchen ermittelt.

Bei den letzten beiden Möglichkeiten kann bei der Anpassung der Vergleichsgröße auch der Lenkwinkel deltaz berücksichtigt werden. Dies ist durch die strichlinierte Zuführung der Größe deltaz ausgehend vom Block 203 zum Block 205 dargestellt. Die Berücksichtigung des Lenkwinkels bei der Ermittlung der Vergleichsgröße deltapsisw erfolgt dabei dergestalt, daß mit zunehmendem Lenkwinkel ein größerer Wert für die Vergleichsgröße zugelassen wird.

Bei einer Fahrdynamikregelung werden am Zugfahrzeug als Stabilisierungseingriffe Eingriffe in die Bremsen und/oder Eingriffe in den Vortrieb und/oder Eingriffe in den Retarder durchgeführt. Diese Eingriffe werden durch die zweiten Aktuatormittel 207, die dem Zugfahrzeug zugeordnet sind, durchgeführt. Zur Ansteuerung der zweiten Aktuatormittel 207 werden diesen ausgehend vom Block 206 für die Durchführung von Bremseneingriffen die Signale bzw. Größen AijSZM, zur Durchführung von Eingriffen in den Vortrieb das Signal bzw. die Größe mot und zur Durchführung von Eingriffen in den Retarder das Signal bzw. die Größe Ret zugeführt. Je nach Art der Verbrennungsmaschine kann in Abhängigkeit der Größen mot der Drosselklappenwinkel, der Zündzeitpunkt oder die Kraftstoffeinspritzmenge variiert werden.

Entsprechend werden in Abhängigkeit der im Block 206 implementierten Regelung auch Bremseneingriffe an den Rädern des Aufliegers durchgeführt. Zu diesem Zweck werden ersten Aktuatormitteln 208, die dem Auflieger zugeordnet sind, ausgehend vom Block 206 Größen bzw. Signale AxjSA zugeführt. Diese Bremseneingriffe für den Auflieger werden in erster Linie in Abhängigkeit des Vergleiches der Knickwinkelgröße deltapsi mit der Vergleichsgröße deltapsisw durchgeführt. Ist nämlich die Knickwinkelgröße größer als die Vergleichsgröße, so liegt für das Fahrzeuggespann eine Instabilität vor. Um diese Instabilität zu beseitigen, d.h. um den Knickwinkel zu verkleinern, wird der Auflieger gebremst und somit das Fahrzeuggespann geradegezogen.

An dieser Stelle sei bemerkt, daß durch die Schreibweise AijSZM bzw. AxjSA zum Ausdruck gebracht werden soll, daß sowohl für das Zugfahrzeug als auch für den Auflieger radindividuelle Bremseneingriffe durchgeführt werden können.

Im Rahmen der Regelung werden dem Block 206 ausgehend von den ersten Aktuatormitteln 208 Größen RySA und ausgehend von den zweiten Aktuatormitteln 207 Größen RySZM zugeführt, die jeweils den Zustand der Aktuatormittel beschreiben und die bei der Regelung berücksichtigt werden.

Zur Erkennung, ob für das Zugfahrzeug Stabilisierungseingriffe durchgeführt werden, werden dem Block 205 ausgehend vom Block 206 die Größen AijSZM, mot bzw. Ret zugeführt. Bei dieser Art der Zuführung kann im Block 205 festgestellt werden, welche Art von Stabilisierungseingriffe und in welcher Stärke diese Stabilisierungseingriffe durchgeführt werden.

Anstelle der Zuführung der Größen AijSZM, mot sowie Ret bietet es sich alternativ an, dem Block 205 ausgehend vom Block 206 eine Größe ESZM zuzuführen, die pauschal anzeigt, ob für das Zugfahrzeug Stabilisierungseingriffe durchgeführt werden oder nicht. In diesem Fall ist im Block 205 allerdings keine Information darüber vorhanden, welche Art von Stabilisierungseingriffe bzw. in welcher Stärke diese ausgeführt werden.

Alternativ zu der vorstehenden Fahrdynamikregelung kann im Block 206 auch eine Bremsschlupfregelung und/oder eine Antriebsschlupfregelung implementiert sein. In beiden Fällen ist für gewöhnlich im Block 206 keine Informationen über den am Fahrzeug eingestellten Lenkwinkel bzw. über die Gierrate des Zugfahrzeuges erforderlich. Für gewöhnlich werden dem Regler 206 lediglich die Raddrehzahlgrößen nzij bzw. naxj zugeführt. Als Stabilisierungseingriffe werden bei einer Bremsschlupfregelung Bremseneingriffe am Zugfahrzeug und/oder am Auflieger durchgeführt, d.h. es werden im Block 206 in an sich bekannter Weise die Größen AijSZM bzw. AxjSA erzeugt und den ersten bzw. den zweiten Aktuatormitteln 208 bzw. 207 zugeführt. Bei einer Antriebsschlupfregelung werden als Stabilisierungseingriffe Eingriffe in die Bremsen des Zugfahrzeuges und/oder in den Vortrieb des Zugfahrzeuges durchgeführt, d.h. es werden in diesem Fall die Größen AijSZM bzw. mot erzeugt, die den zweiten Aktuatormitteln zugeführt werden.

Abschließend sei nochmals auf die Sensorik, die durch den Block 203 repräsentiert wird, und die zur Durchführung der im Block 206 implementierten Regelung erforderlich ist, eingegangen. Für den Fall, daß im Block 206 eine Fahrdynamikregelung implementiert ist, mit der für das Zugfahrzeug eine Regelung zumindest der Gierrate bzw. des Schwimmwinkels durchgeführt wird, müssen mit dem Block 203 für das Zugfahrzeug die Querbeschleunigung, die Gierrate, der Lenkwinkel und der vom Fahrer eingestellte Vordruck und für den Auflieger die Raddrehzahlen erfaßt werden. Für den Fall, daß im Block 206 eine Bremsschlupfregelung bzw. eine Antriebsschlupfregelung implementiert ist, sind für gewöhnlich keine Angaben über die Querbeschleunigung, die Gierrate, den Lenkwinkel und den vom Fahrer eingestellten Vordruck erforderlich.

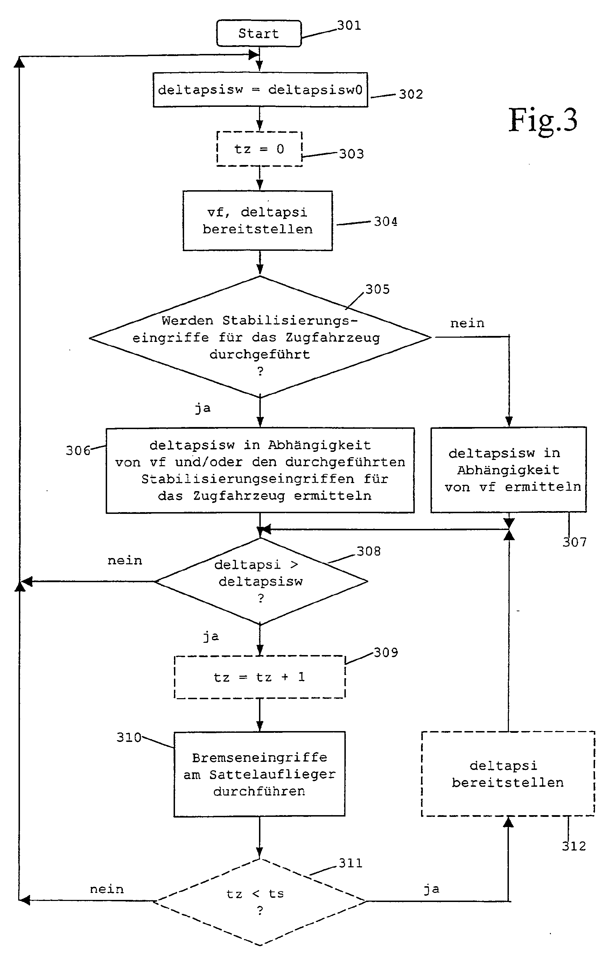

Figur 3 zeigt mit Hilfe eines Flußdiagrammes den Ablauf des erfindungsgemäßen Verfahrens, welches in der erfindungsgemäßen Vorrichtung abläuft. Zunächst wird das in Figur 3 dargestellte Flußdiagramm als ganzes, d.h. auch mit den gestrichelt gezeichneten Schritten 303, 309, 311 sowie 312 beschrieben. Die strichliniert dargestellten Schritte sind als optional anzusehen, und haben die Funktion, die vorgegebene Vergleichsgröße, deren Wert verkleinert wurde, für eine bestimmte Zeitdauer beizubehalten. Auf diesen Sachverhalt wird weiter unten noch ausführlich eingegangen.

Das erfindungsgemäße Verfahren beginnt mit einem Schritt 301, an den sich ein Schritt 302 anschließt. Im Schritt 302 wird der Vergleichsgröße deltapsisw ein Wert deltapsisw0 zugewiesen. Je nachdem, welche Art der Ermittlung der Vergleichsgröße verwendet wird, hat diese Zuweisung eine unterschiedliche Bedeutung. Wird die Vergleichsgröße deltapsisw als fest vorgegeben angenommen, so wird ihr im Schritt 302 dieser fest vorgegebene Wert deltapsisw0 zugewiesen. In diesem Fall wird in einem noch zu beschreibenden Schritt 306 die Vergleichsgröße deltapsisw in Abhängigkeit der Geschwindigkeitsgröße vf und abhängig davon, ob für das Zugfahrzeug Stabilisierungseingriffe durchgeführt werden, ermittelt d.h. an die jeweilige Fahrzeuggespannsituation angepaßt. Soll die Vergleichsgröße dagegen mit Hilfe eines ersten Fahrzeugmodells ermittelt werden, so wird im Schritt 302 der Vergleichsgröße deltapsisw der mit Hilfe des ersten Fahrzeugmodelles ermittelte Wert zugewiesen. In diesem Fall wird in Schritt 306 die Vergleichsgröße in erster Linie in Abhängigkeit davon, ob für das Zugfahrzeug Stabilisierungseingriffe durchgeführt werden, angepaßt. Wird dagegen die Vergleichsgröße deltapsisw mit Hilfe eines Kennfeldes ermittelt, was in den Schritten 306 bzw. 307 passiert, so wird im Schritt 302 die Vergleichsgröße deltapsisw mit einem vorgegebenen Wert deltapsisw0 initialisiert.

Anschließend an den Schritt 302 wird ein Schritt 303 ausgeführt. Im Schritt 303 wird ein Zeitzähler tz initialisiert, d.h. ihm wird der Wert 0 zugewiesen. An den Schritt 303 schließt sich ein Schritt 304 an.

Im Schritt 304 wird die Geschwindigkeitsgröße vf sowie die Knickwinkelgröße deltapsi bereitgestellt. In diesem Zusammenhang sei auf die Blöcke 204 bzw. 202 in Figur 2 verwiesen. Anschließend an den Schritt 304 wird ein Schritt 305 ausgeführt. In diesem Schritt 305 wird überprüft, ob für das Zugfahrzeug Stabilisierungseingriffe durchgeführt werden. Hierzu werden, wie bereits beschrieben, im Block 205 die Größen AijSZM, mot sowie Ret bzw. die Größe ESZM ausgewertet. Wird im Schritt 305 festgestellt, daß für das Fahrzeug Stabilisierungseingriffe durchgeführt werden, so wird anschließend an den Schritt 305 ein Schritt 306 ausgeführt.

Im Schritt 306 wird die Vergleichsgröße deltapsisw in Abhängigkeit der Geschwindigkeitsgröße vf und/oder abhängig davon, ob für das Zugfahrzeug Stabilisierungseingriffe durchgeführt werden, ermittelt. Wie bereits angedeutet, sind hierbei drei Möglichkeiten denkbar: Für den Fall, daß es sich bei der Vergleichsgröße um eine fest vorgegebene Vergleichsgröße handelt, wird diese Vergleichsgröße in Abhängigkeit der Geschwindigkeitsgröße und/oder abhängig davon, ob für das Zugfahrzeug Stabilisierungseingriffe durchgeführt werden, an die jeweils vorliegende Fahrzeuggespannsituation angepaßt. Entsprechendes gilt für den Fall, daß die Vergleichsgröße mit Hilfe eines ersten Fahrzeugmodelles ermittelt wird. Allerdings findet in diesem Fall die Anpassung an die jeweils vorliegende Fahrzeuggespannsituation in erster Linie abhängig davon statt, ob für das Zugfahrzeug Stabilisierungseingriffe durchgeführt werden oder nicht. In beiden Fällen läuft die Anpassung an die jeweils vorliegende Fahrzeuggespannsituation so ab, daß der Wert der vorgegebenen Vergleichsgröße mit größer werdendem Wert der Geschwindigkeitsgröße und/oder bei Vorliegen von für das Zugfahrzeug durchgeführten Stabilisierungseingriffen verkleinert wird. Für den Fall, daß die Vergleichsgröße mit Hilfe eines Kennfeldes ermittelt wird, wird im Schritt 306 der Wert der Vergleichsgröße in Abhängigkeit des Wertes der Geschwindigkeitsgröße und/oder in Abhängigkeit der Art und/oder der Stärke der für das Zugfahrzeug durchgeführten Stabilisierungseingriffe aus dem Kennfeld ausgelesen. Dabei nimmt der Wert der Vergleichsgröße mit größer werdendem Wert der Geschwindigkeitsgröße und/oder bei Vorliegen von für das Zugfahrzeug durchgeführten Stabilisierungseingriffen ab. Anschließend an den Schritt 306 wird ein Schritt 308 ausgeführt.

Wird dagegen im Schritt 305 festgestellt, daß für das Zugfahrzeug keine Stabilisierungseingriffe durchgeführt werden, so wird anschließend an den Schritt 305 ein Schritt 307 ausgeführt, in welchem die Vergleichsgröße deltapsisw lediglich in Abhängigkeit der Geschwindigkeitsgröße vf ermittelt wird. Für die im Schritt 307 stattfindende Ermittlung bzw. Anpassung gelten die im Zusammenhang mit dem Schritt 306 gemachten Ausführungen. Anschließend an den Schritt 307 wird ebenfalls der Schritt 308 ausgeführt.

Im Schritt 308 findet ein Vergleich statt, bei dem die Knickwinkelgröße deltapsi mit der Vergleichsgröße deltapsisw verglichen wird. Wird im Schritt 308 festgestellt, daß die Knickwinkelgröße deltapsi größer als die Vergleichsgröße deltapsisw ist, was gleichbedeutend damit ist, daß für das Fahrzeuggespann eine Instabilität vorliegt, so wird anschließend an den Schritt 308 ein Schritt 309 ausgeführt. Wird dagegen im Schritt 308 festgestellt, daß die Knickwinkelgröße deltapsi kleiner als die Vergleichsgröße deltapsisw ist, was gleichbedeutend damit ist, daß für das Fahrzeuggespann keine Instabilität vorliegt, so wird anschließend an den Schritt 308 erneut der Schritt 302 ausgeführt, da in diesem Fall keine Bremseneingriffe für den Auflieger erforderlich sind.

Im Schritt 309 wird der Zeitzähler tz um 1 erhöht. Anschließend an den Schritt 309 wird ein Schritt 310 ausgeführt. In diesem Schritt werden Bremseneingriffe am Sattelauflieger durchgeführt, so daß das Fahrzeuggespann gestreckt wird, d.h. der Knickwinkel des Fahrzeuggespannes verkleinert wird bzw. das Fahrzeuggespann stabilisiert wird. Hierzu werden vom Block 206 entsprechende Signale bzw. Größen AxjSA den ersten Aktuatormitteln 208 zugeführt. Anschließend an den Schritt 310 wird ein Schritt 311 ausgeführt. Die Bremseneingriffe können dabei am Sattelauflieger radindividuell, seitenweise bzw. für alle Räder gleichermaßen durchgeführt werden.

Im Schritt 311 findet ein Vergleich statt, bei dem der Zeitzähler tz mit einem Schwellenwert ts verglichen wird. Wird im Schritt 311 festgestellt, daß der Zeitzähler tz größer als der Schwellenwert ts ist, was gleichbedeutend damit ist, daß die an die Fahrzeuggespannsituation angepaßte Vergleichsgröße deltapsisw schon eine vorgegebene Zeit beibehalten wurde, so wird anschließend an den Schritt 311 erneut der Schritt 302 ausgeführt, was gleichbedeutend damit ist, daß ein neuer Wert für die Vergleichsgröße deltapsisw ermittelt werden kann. Wird dagegen im Schritt 311 festgestellt, daß der Zeitzähler tz kleiner als der Schwellenwert ts ist, was gleichbedeutend damit ist, daß die Vergleichsgröße deltapsisw noch nicht für eine bestimmte Zeitdauer beibehalten wurde, so wird anschließend an den Schritt 311 ein Schritt 312 ausgeführt. Dadurch wird der Wert der Vergleichsgröße deltapsisw beibehalten. Im Schritt 312 wird der aktuelle Wert der Knickwinkelgröße deltapsi bereitgestellt. Anschließend an den Schritt 312 wird erneut der Schritt 308 ausgeführt.

An dieser Stelle sei nochmals auf die strichliniert dargestellten Schritten 303, 309, 311 bzw. 312 eingegangen. Mit Hilfe dieser Schritte wird realisiert, daß der Wert der vorgegebenen Vergleichsgröße deltapsisw, nachdem er verkleinert wurde, für eine bestimmte Zeitdauer ts beibehalten wird. Dadurch wird sichergestellt, daß für den Fall, bei dem eine Instabilität des Fahrzeuggespannes vorliegt, d.h. die Knickwinkelgröße deltapsi größer als die Vergleichsgröße deltapsisw ist, die verkleinerte, d.h. die an die Fahrzeuggespannsituation angepaßte Vergleichsgröße deltapsisw für eine bestimmte Zeitdauer beibehalten wird, und somit schon bei kleineren Knickwinkeln, bei denen ansonsten keine Stabilisierungseingriffe am Auflieger durchgeführt werden würden, welche durchgeführt werden.

Wie bereits erwähnt, kann in den Schritten 306 bzw. 307 die Ermittlung der Vergleichsgröße deltapsisw auch in Abhängigkeit der Lenkwinkelgröße deltaz ausgeführt werden. Diese Möglichkeit wurde in Figur 3 nicht aufgenommen. Soll die Vergleichsgröße deltapsisw auch in Abhängigkeit der Lenkwinkel deltaz ermittelt werde, so sind in den Schritten 304, 306 bzw. 307 entsprechende Ergänzungen erforderlich.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

## Patentansprüche

1. Vorrichtung zur Stabilisierung eines aus einem Zugfahrzeug(101) und einem Anhänger bzw. Auflieger (102) bestehenden Fahrzeuggespannes,
die erste Ermittlungsmittel (202) enthält, mit denen eine Knickwinkelgröße (deltapsi) ermittelt wird, die den Winkel zwischen einer in Längsrichtung des Zugfahrzeuges orientierten Achse (103), insbesondere der Längsachse des Zugfahrzeuges, und einer in Längsrichtung des Anhängers bzw. Aufliegers orientierten Achse (104), insbesondere der Längsachse des Anhängers bzw. Aufliegers, beschreibt,
die Verarbeitungsmittel (206) enthält, mit denen in Abhängigkeit der Knickwinkelgröße und einer Vergleichsgröße (deltapsisw)ein Vergleich durchgeführt wird,
die erste Aktuatormittel (208) enthält, die dem Anhänger bzw. Auflieger zugeordnet sind und mit denen an wenigstens einem Rad des Anhängers bzw. Aufliegers ein Bremsdruck einstellbar ist, wobei diese ersten Aktuatormittel zumindest in Abhängigkeit des mit den Verarbeitungsmitteln durchgeführten Vergleiches betätigt werden,
wobei die Vorrichtung zweite Ermittlungsmittel (205) enthält, mit denen die Vergleichsgröße in Abhängigkeit einer Geschwindigkeitsgröße (vf), die die Geschwindigkeit des Zugfahrzeuges beschreibt, ermittelt wird, **dadurch gekennzeichnet,**
**dass** die Vergleichsgröße zudem auch abhängig davon, ob für das Zugfahrzeug Stabilisierungseingriffe (AijSZM, mot, Ret, ESZM) durchgeführt werden, ermittelt wird.

2. Vorrichtung nach Anspruch 1, **dadurch gekennzeichnet,**
**daß** dritte Ermittlungsmittel (203) vorgesehen sind, mit denen wenigstens eine Lenkwinkelgröße (deltaz) ermittelt wird, die den für das Zugfahrzeug eingestellten Lenkwinkel beschreibt, und daß die Vergleichsgröße ferner in Abhängigkeit der Lenkwinkelgröße ermittelt wird.

3. Vorrichtung nach Anspruch 1, **dadurch gekennzeichnet,**
**daß** die Vorrichtung ferner zweite Aktuatormittel (207) enthält, die dem Zugfahrzeug zugeordnet sind und mit denen die Stabilisierungseingriffe für das Zugfahrzeug durchgeführt werden, wobei es sich bei diesen Stabilisierungseingriffen um Eingriffe in die Bremsen (AijSZM) des Zugfahrzeuges und/oder in den Vortrieb (mot) und/oder in den Retarder (Ret) handelt.

4. Vorrichtung nach Anspruch 3, **dadurch gekennzeichnet,**
**daß** den zweiten Ermittlungsmitteln zur Erkennung, ob für das Zugfahrzeug Stabilisierungseingriffe durchgeführt werden, Größen (AijSZM, mot, Ret) zugeführt werden, die in den Verarbeitungsmitteln für die Ansteuerung der zweiten Aktuatormittel erzeugt werden, oder eine Größe (ESZM) zugeführt wird, die in den Verarbeitungsmitteln erzeugt wird und die anzeigt, daß für das Zugfahrzeug Stabilisierungseingriffe durchgeführt werden.

5. Vorrichtung nach Anspruch 1, **dadurch gekennzeichnet,**
**daß** mit der Vorrichtung zur Stabilisierung Stabilisierungseingriffe für das Zugfahrzeug wenigstens in Abhängigkeit einer die Querdynamik des Zugfahrzeuges beschreibenden Größe, insbesondere einer die Gierrate und/oder einer die Querbeschleunigung des Zugfahrzeuges beschreibenden Größe, durchgeführbar sind.

6. Vorrichtung nach Anspruch 1, **dadurch gekennzeichnet,**
**daß** die Betätigung der ersten Aktuatormittel dann durchgeführt wird, wenn die Knickwinkelgröße größer als die Vergleichsgröße ist.

7. Vorrichtung nach Anspruch 1, **dadurch gekennzeichnet,**
**daß** es sich bei der Vergleichsgröße um eine vorgegebene Vergleichsgröße handelt, die entweder fest vorgegeben ist oder die mit Hilfe eines ersten Fahrzeugmodells ermittelt wird, wobei die vorgegebene Vergleichsgröße in Abhängigkeit der Geschwindigkeitsgröße und/oder abhängig davon, ob für das Zugfahrzeug Stabilisierungseingriffe durchgeführt werden, an eine vorliegende Fahrzeuggespannsituation angepaßt wird.

8. Vorrichtung nach Anspruch 7, **dadurch gekennzeichnet,**
**daß** der Wert der vorgegebenen Vergleichsgröße mit größer werdendem Wert der Geschwindigkeitsgröße und/oder bei Vorliegen von für das Zugfahrzeug durchgeführten Stabilisierungseingriffen verkleinert wird.

9. Vorrichtung nach Anspruch 8, **dadurch gekennzeichnet,**
**daß** der Wert der vorgegebenen Vergleichsgröße, nachdem er verkleinert wurde, für eine bestimmte Zeitdauer beibehalten wird.

10. Vorrichtung nach Anspruch 1, **dadurch gekennzeichnet,**
**daß** der Wert der Vergleichsgröße in Abhängigkeit des Wertes der Geschwindigkeitsgröße und/oder in Abhängigkeit der Art und/oder der Stärke der für das Zugfahrzeug durchgeführten Stabilisierungseingriffe aus einem Kennfeld auslesbar ist, insbesondere dass das Kennfeld derart ausgebildet ist dass der Wert der Vergleichsgröße mit größer werdendem Wert der Geschwindigkeitsgröße und/oder bei Vorliegen von für das Zugfahrzeug durchgeführten Stabilisierungseingriffen abnimmt.

11. Vorrichtung nach Anspruch 1, **dadurch gekennzeichnet,**
**daß** die ersten Ermittlungsmittel als Sensormittel ausgebildet sind, wobei als Sensormittel ein sowohl mit dem Zugfahrzeug als auch mit dem Auflieger in Wirkverbindung stehendes Potentiometer oder optische Sensoren oder Ultraschallsensoren oder Radarsensoren eingesetzt werden, oder
**daß** in den ersten Ermittlungsmitteln die Knickwinkelgröße unter Verwendung eines zweiten Fahrzeugmodells ermittelt wird.

12. Verfahren zur Stabilisierung eines aus einem Zugfahrzeug (101) und einem Anhänger bzw. Auflieger (102) bestehenden Fahrzeuggespannes,
bei dem eine Knickwinkelgröße (deltapsi) ermittelt wird, die den Winkel zwischen einer in Längsrichtung des Zugfahrzeuges orientierten Achse (103), insbesondere der Längsachse des Zugfahrzeuges, und einer in Längsrichtung des Anhängers bzw. Aufliegers orientierten Achse (104), insbesondere der Längsachse des Anhängers bzw. Aufliegers, beschreibt, bei dem in Abhängigkeit der Knickwinkelgröße und einer Vergleichsgröße (deltapsisw) ein Vergleich durchgeführt wird,
bei dem mit ersten Aktuatormitteln (208), die dem Anhänger bzw. Auflieger zugeordnet sind, an wenigstens einem Rad des Anhängers bzw. Aufliegers ein Bremsdruck einstellbar ist,
wobei diese ersten Aktuatormittel zumindest in Abhängigkeit des mit den Verarbeitungsmitteln durchgeführten Vergleiches betätigt werden,
wobei die Vergleichsgröße in Abhängigkeit einer Geschwindigkeitsgröße (vf), die die Geschwindigkeit des Zugfahrzeuges beschreibt, ermittelt wird, **dadurch gekennzeichnet,**
**dass** die Vergleichsgröße zudem auch abhängig davon, ob für das Zugfahrzeug Stabilisierungseingriffe (AijSZM, mot, Ret, ESZM) durchgeführt werden, ermittelt wird.

## Claims

1. Device for stabilisation of an articulated vehicle consisting of a tractor unit (101) and a trailer or semi-trailer (102) unit, respectively,
including first determining means (202) used to determine a folding-angle quantity (deltapsi) descriptive of the angle between an axis (103) oriented along the longitudinal extension of said tractor unit, in particular the longitudinal axis of said tractor unit, and an axis (104) oriented along the longitudinal extension of said trailer or semi-trailer unit, respectively, in particular the longitudinal axis of said trailer or semi-trailer unit, respectively,
including processing means (206) employed to perform a comparison as a function of said folding-angle quantity and a comparative quantity (deltapsisw),
including first actuator means (208) associated with said trailer or semi-trailer unit, respectively, and permitting the setting of a brake pressure on at least one wheel of said trailer or semi-trailer unit, respectively, with these first actuator means being operated at least in response to the comparison performed with employment of said processing means,
with the device including second determining means (205) employed to determine said comparative quantity as a function of a velocity quantity (vf) descriptive of the speed of said tractor unit, **characterised in**
**that** said comparative quantity is moreover determined also as a function of the fact whether stabilizing interventive actions (AijSZM, mot, Ret, ESZM) are performed for said tractor unit.

2. Device according to Claim 1, **characterised in that** third determining means (203) are provided which are used to determine at least one steering-angle quantity (deltaz) descriptive of the steering angle set for said tractor unit, and that said comparative quantity is moreover determined as a function of said steering-angle quantity.

3. Device according to Claim 1, **characterised in that** the device includes furthermore second actuator means (207) associated with said tractor unit and used to perform stabilizing interventive actions for said tractor unit, with these stabilizing interventive actions being actions on the brakes (AijSZM) of said tractor unit and/or on the propulsion system (mot) and/or on the retarder (Ret).

4. Device according to Claim 3, **characterised in that** said second determining means for determining whether stabilizing interventive actions are performed for said tractor unit are supplied with quantities (AijSZM, mot, Ret) which are generated in said processing means for controlling said second actuator means, or with a quantity generated in said processing means and indicating that stabilizing interventive actions are performed for said tractor unit.

5. Device according to Claim 1, **characterised in that** said device for stabilization is adapted for the performance of stabilizing interventive actions for said tractor unit at least in response to a quantity descriptive of the transverse dynamics of said tractor unit, in particular of a quantity descriptive of the yawing rate and/or the transverse acceleration of said tractor unit.

6. Device according to Claim 1, **characterised in that** the actuation of said first actuator means is carried out when the folding angle quantity is greater than said comparative quantity.

7. Device according to Claim 1, **characterised in that** said comparative quantity is a predetermined comparative quantity which is either invariably predetermined or which is established by means of a first vehicle model, with said predetermined comparative quantity being adapted to a currently existing condition of the articulated vehicle, as a function of the velocity quantity and/or as a function of whether stabilizing interventive actions are performed for said tractor unit.

8. Device according to Claim 7, **characterised in that** the value of said comparative quantity is reduced as the value of the velocity quantity increases and/or when stabilizing interventive actions are performed for said tractor unit.

9. Device according to Claim 8, **characterised in that** after its reduction, the value of said predetermined comparative quantity is retained for a defined period of time

10. Device according to Claim 1, **characterised in that** the value of said comparative quantity is adapted to be read out from a characteristic map in dependence on the value of said velocity quantity and/or as a function of the type and/or the intensity of the stabilizing interventive actions performed for said tractor unit, in particular that said characteristic map is so configured that the value of said comparative quantity decreases as the value of said velocity quantity increases and/or when stabilizing interventive actions are performed for said tractor unit..

11. Device according to Claim 1, **characterised in that** said first determining means are designed as sensor means, with a potentiometer operatively connected to both said tractor unit and said semi-trailer unit or optical sensors or ultrasonic sensors or radar sensors being employed as sensor means, or that said folding-angle quantity is determined in said first determining means with application of a second vehicle model.

12. Method of stabilizing an articulated vehicle consisting of a tractor unit (101) and a trailer or semi-trailer (102), respectively,
wherein a folding-angle quantity (deltapsi) is determined which is descriptive of the angle between an axis (103) oriented along the longitudinal extension of said tractor unit, in particular the longitudinal axis of said tractor unit, and an axis (104) oriented along the longitudinal extension of said trailer or semi-trailer unit, respectively, in particular the longitudinal axis of said trailer or semi-trailer unit, respectively,
wherein a comparison is performed as a function of said folding-angle quantity and a comparative quantity (deltapsisw),
wherein a brake pressure is settable by means of first actuator means (208) associated with said trailer or semi-trailer unit, respectively, on at least one wheel of said trailer or semi-trailer unit, respectively,
with these first actuator means being operated at least in response to the comparison performed with employment of said processing means,
with said comparative quantity being determined as a function of a velocity quantity (vf) descriptive of the speed of said tractor unit, **characterised in**
**that** said comparative quantity is moreover determined also as a function of the fact whether stabilizing interventive actions (AijSZM, mot, Ret, ESZM) are performed for said tractor unit.

## Revendications

1. Dispositif à stabiliser un ensemble de véhicule articulé composé d'un véhicule tracteur (101) et d'un véhicule tracté ou respectivement d'une semi-remorque (102),
comprenant des premiers moyens de détermination (202) utilisés à déterminer une grandeur de l'angle de dérapage (deltapsi) descriptive de l'angle entre un axe (103) orienté le long de l'étendue longitudinale dudit véhicule tracteur, en particulier l'axe longitudinal dudit véhicule tracteur, et un axe (104) orienté le long de l'étendue longitudinale dudit véhicule tracté ou respectivement de ladite semi-remorque, en particulier l'axe longitudinal dudit véhicule tracté ou respectivement de ladite semi-remorque,
comprenant des moyens de traitement (206) utilisés à réaliser une comparaison en fonction de ladite grandeur de l'angle de dérapage et une grandeur comparative (deltapsisw),
comprenant des premiers moyens actionneurs (208) affectés audit véhicule tracté ou respectivement à ladite semi-remorque, et permettant le réglage d'une pression de freinage à au moins une roue dudit véhicule tracté ou respectivement de ladite semi-remorque, à ces premiers moyens actionneurs étant commandés au moins en réponse à la comparaison faite en appliquant lesdits moyens de traitement,
au dispositif comprenant des deuxièmes moyens de détermination (205) utilisés à déterminer ladite grandeur comparative en fonction d'une grandeur de vitesse (vf) descriptive de la vitesse dudit véhicule tracteur, **caractérisé en ce que** ladite grandeur comparative est, au plus, également déterminée en fonction du fait s'il y a des manoeuvres de stabilisation (AijSZM, mot, Ret, ESZM) pour ledit véhicule tracteur.

2. Dispositif selon la revendication 1, **caractérisé en ce que** des troisièmes moyens de détermination (203) sont disposés, qui sont utilisés à déterminer au moins une grandeur de l'angle de direction (deltaz) descriptive de l'angle de direction réglé pour ledit véhicule tracteur, et **en ce que** ladite grandeur comparative est, au plus, déterminé en fonction de ladite grandeur de l'angle de direction.

3. Dispositif selon la revendication 1, **caractérisé en ce que** le dispositif comprend, au plus, des deuxièmes moyens actionneurs (207) affectés audit véhicule tracteur et utilisés à commander des manoeuvres de stabilisation pour ledit véhicule tracteur, à ces manoeuvres de stabilisation étant des manoeuvres aux freins (AijSZM) dudit véhicule tracteur et/ou au système de propulsion (mot) et/ou au retardateur (Ret).

4. Dispositif selon la revendication 3, **caractérisé en ce que** lesdits deuxièmes moyens de détermination à déterminer s'il y a des manoeuvres de stabilisation pour ledit véhicule tracteur sont alimentés en grandeurs (AijSZM, mot, Ret) engendrées dans lesdits moyens de traitement à commander lesdits deuxièmes moyens actionneurs, ou en une grandeur engendrée dans lesdits moyens de traitement et signalant, qu'il y a des manoeuvres de stabilisation pour ledit véhicule tracteur.

5. Dispositif selon la revendication 1, **caractérisé en ce que** ledit dispositif de stabilisation est appropriées aux manoeuvres de stabilisation pour ledit véhicule tracteur au moins en réponse à une quantité descriptive de la dynamique transversale dudit véhicule tracteur, en particulier d'une grandeur descriptive du taux de lacet et/ou de l'accélération transversale dudit véhicule tracteur.

6. Dispositif selon la revendication 1, **caractérisé en ce que** la commande desdits premiers moyens actionneurs se fait, quand la grandeur de l'angle de dérapage est plus grande que ladite grandeur comparative.

7. Dispositif selon la revendication 1, **caractérisé en ce que** ladite grandeur comparative est une grandeur comparative prédéterminée, qui est prédéterminée de façon invariable ou qui est établie moyennant un premier modèle de véhicule, à ladite grandeur comparative prédéterminée étant adaptée à une situation actuelle de l'ensemble de véhicule articulé, en fonction de la grandeur de vitesse et/ou en fonction du fait, s'il y a des manoeuvres de stabilisation pour ledit véhicule tracteur.

8. Dispositif selon la revendication 7, **caractérisé en ce que** la valeur de ladite grandeur comparative est réduite en correspondance avec l'augmentation de la valeur de la grandeur de vitesse et/ou quand il y a des manoeuvres de stabilisation pour ledit véhicule tracteur.

9. Dispositif selon la revendication 8, **caractérisé en ce qu'**après sa réduction, la valeur de ladite grandeur comparative prédéterminée est retenue pour un intervalle défini.

10. Dispositif selon la revendication 1, **caractérisé en ce que** la valeur de ladite grandeur comparative est apte à être lue d'un champ caractéristique en dépendance sur la valeur de ladite grandeur de vitesse et/ou en fonction du gendre et/ou de l'intensité des manoeuvres de stabilisation commandés pour ledit véhicule tracteur, en particulier **en ce que** ledit champ caractéristique est configuré d'une telle manière, que la de ladite grandeur comparative se réduit en correspondance avec l'augmentation de la valeur de ladite grandeur de vitesse et/ou quand il y a des manoeuvres de stabilisation pour ledit véhicule tracteur..

11. Dispositif selon la revendication 1, **caractérisé en ce que** lesdits premiers moyens de détermination sont conçus en tant que moyens détecteurs, à un potentiomètre relié, de façon active, audit véhicule tracteur et à ladite semi-remorque, ou en tant que détecteurs optiques ou détecteurs ultrasonores ou détecteurs radar, qui sont utilisés comme des moyens détecteurs, ou **en ce que** ladite grandeur de l'angle de dérapage est déterminée dans lesdits premiers moyens de détermination à application d'un deuxième modèle de véhicule.

12. Procédé à stabiliser un ensemble de véhicule articulé composé d'un véhicule tracteur (101) et d'un véhicule tracté ou respectivement d'une semi-remorque (102),
dans lequel une grandeur de l'angle de dérapage (deltapsi) est déterminée, qui est descriptive de l'angle entre un axe (103) orienté le long de l'étendue longitudinale dudit véhicule tracteur, en particulier l'axe longitudinal dudit véhicule tracteur, et un axe (104) orienté le long de l'étendue longitudinale dudit véhicule tracté ou respectivement de ladite la semi-remorque, en particulier l'axe longitudinal dudit véhicule tracté ou respectivement de ladite semi-remorque,
dans lequel une comparaison est faite en fonction de ladite grandeur de l'angle de dérapage et d'une grandeur comparative (deltapsisw),
dans lequel une pression de freinage est réglable moyennant des premiers moyens actionneurs (208) affectés audit véhicule tracté ou respectivement à ladite semi-remorque, à au moins une roue dudit véhicule tracté ou respectivement de ladite semi-remorque,
à ces premiers moyens actionneurs étant commandés au moins en réponse à la comparaison faite en utilisant lesdits moyens de traitement,
à ladite grandeur comparative étant déterminée en fonction d'une grandeur de vitesse (vf) descriptive de la vitesse dudit véhicule tracteur, **caractérisé en ce**
**que** ladite grandeur comparative est, au plus, également déterminée en fonction du fait s'il y a des manoeuvres de stabilisation (AijSZM, mot, Ret, ESZM) pour ledit véhicule tracteur.
